Europäisches Patentamt

European Patent Office

Office européen des brevets

(19)

(11) EP 0 966 782 B1

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(21) Anmeldenummer: **98924007.2**

(22) Anmeldetag: **10.03.1998**

(51) Int Cl.⁷: $H02H\ 7/085$

(86) Internationale Anmeldenummer:
**PCT/DE98/00757**

(87) Internationale Veröffentlichungsnummer:
**WO 98/40945 (17.09.1998 Gazette 1998/37)**

(54) **VERFAHREN ZUR ELEKTRISCHEN STEUERUNG UND REGELUNG DER BEWEGUNG VON ELEKTRISCH BETRIEBENEN AGGREGATEN**

METHOD FOR ELECTRONIC CONTROL AND ADJUSTMENT OF THE MOVEMENT OF ELECTRICALLY ACTUATED UNITS

PROCEDE DE COMMANDE ET DE REGULATION ELECTRIQUES DU DEPLACEMENT D'UNITES ACTIONNEES ELECTRIQUEMENT

(84) Benannte Vertragsstaaten:
**DE ES FR GB IT SE**

(30) Priorität: **12.03.1997 DE 19711979**

(43) Veröffentlichungstag der Anmeldung:
**29.12.1999 Patentblatt 1999/52**

(73) Patentinhaber: **Brose Fahrzeugteile GmbH & Co. KG Coburg**
**96450 Coburg (DE)**

(72) Erfinder:
• **ÜBELEIN, Jörg**
**D-96271 Grub am Forst (DE)**

• **KALB, Roland**
**D-96269 Rossach (DE)**
• **SEEBERGER, Jürgen**
**D-96148 Baunach (DE)**

(74) Vertreter: **Baumgärtel, Gunnar, Dr.**
**Patentanwälte Maikowski & Ninnemann,**
**Postfach 15 09 20**
**10671 Berlin (DE)**

(56) Entgegenhaltungen:
EP-A- 0 047 812     DE-A- 3 532 078
DE-A- 4 214 998     DE-A- 19 507 137
US-A- 5 334 876

**Beschreibung**

Die Erfindung bezieht sich auf ein Verfahren zur Steuerung und Regelung der Bewegung von elektrisch betriebenen Aggregaten, insbesondere von Fensterhebern, Schiebedächern oder dergleichen in Kraftfahrzeugen, gemäß dem Oberbegriff des Anspruchs 1.

Aus der DE 30 34 118 A1 ist ein Verfahren zur elektronischen Betätigung und Überwachung des Öffnungs- bzw. Schließzyklus von elektrisch betätigbaren Aggregaten, wie Fensterheber und elektrische Schiebedächer in Kraftfahrzeugen bekannt, bei dem der beim Öffnen des Aggregates zurückgelegte Weg elektronisch erfaßt und beim Schließen des Aggregates der erfaßte Öffnungsweg mit dem zurückgelegten Schließweg elektronisch verglichen wird. Der Öffnungs- und Schließweg des Aggregates wird hierzu in drei Bereiche aufgeteilt, von denen der erste Bereich von halb geöffnet bis völlig geöffnet, der zweite Bereich von halb geöffnet bis nahezu völlig geschlossen und der dritte Bereich von nahezu völlig geschlossen bis völlig geschlossen verläuft.

Im ersten und dritten Bereich wird der das völlig geöffnete und völlig geschlossene Aggregat wiedergebende Blockierzustand erfaßt und das Stellorgan des Aggregats abgeschaltet, während im zweiten Bereich die Drehzahl des Stellantriebes des Aggregats erfaßt und bei einer Verminderung der Drehzahl der Stellantrieb abgeschaltet wird.

Bei diesem bekannten Verfahren zur Schaffung eines sogenannten "Einklemmschutzes" ist der Stellantrieb in seiner Leistung so auszulegen, daß über den gesamten Verstellbereich die durch die Art des Aggregates und durch äußere Einflüsse bedingten mechanischen Widerstände überwunden werden. Aus diesem Grunde ist der Stellantrieb in seiner Leistungsabgabe deutlich größer ausgelegt als es für den größten Teil des Verstellbereiches erforderlich ist. Dies wiederum hat zur Folge, daß von dem zu verstellenden Aggregateteil ein im Verstellbereich befindliches Körperteil mit einer sehr hohen Kraft eingeklemmt wird.

Ein weiterer Nachteil des bekannten Verfahrens besteht darin, daß im dritten Bereich, das heißt beim Einfahren der Fensterscheibe oder des Schiebedaches in den Dichtungsbereich zum völligen Schließen des Fensters bzw. Schiebedaches lediglich der Blockierzustand, nicht aber ein Einklemmzustand erfaßt wird.

Aus der DE 195 07 137 A1 ist ein Verfahren zur Überwachung und Steuerung des Öffnungs- und Schließvorgangs von in Kraftfahrzeugen vorhandenen elektrisch betriebenen Aggregaten bekannt, bei dem die Leistung des Stellmotors so gesteuert wird, daß die Verstellgeschwindigkeit des Stellorgans über dessen Verstellweg in Abhängigkeit von vorgegebenen Positionen des Aggregates einstellbar ist. Auf diese Weise soll die von dem zu verstellenden Aggregateteil im Einklemmfall ausgeübte Kraft über kritische Bereiche des Verstellweges auf ein Minimum begrenzt werden, indem der kritische Verstellbereich langsamer und damit feinfühlig durchfahren wird.

Dieses Verfahren ermöglicht zwar einen "Softeinlauf" in den Dichtungsbereich, das heißt eine geringe Verstellgeschwindigkeit des zu verstellenden Aggregateteils im Bereich des Dichtungseinlaufes, um damit auch länderspezifische Bedingungen hinsichtlich eines wirksamen Einklemmschutzes zu erfüllen, jedoch ist es trotz des langsamen Einlaufs des zu verstellenden Aggregates in den Dichtungsbereich insbesondere bei rahmenlosen Türen, Türen mit außenliegenden Scheiben und Cabriolet-Türen schwierig bis unmöglich, einen normierten 4mm-Rundstab zur Ermittlung der Wirksamkeit eines Einklemmschutzes zu erkennen und sicher von Einflüssen der Verschiebekräfte im Dichtungsbereich zu unterscheiden. Darüber hinaus führt das bekannte Verfahren zu Fehlauslösungen des Einklemmschutzes mit anschließendem Reversieren des zu verstellenden Aggregates beim Einlauf in die Dichtung. Außerdem wird die Schließzeit der Fensterscheibe erhöht.

Aus der DE 35 32 078 C2 ist ein Steuerverfahren für den Antrieb von Fenstern oder Türen mit einem Elektromotor bekannt, bei dem der Antriebsstrom während der Schließbewegung gemessen und die Stromänderung in konstanten Zeitintervallen durch Setzen eines Stromänderungs-Grenzwertes überprüft wird. Hierzu wird innerhalb einer konstanten Periode ein minimaler Stromwert vorgegeben, dem ein festgelegter Betrag hinzuaddiert und die Summe als Referenzwert zum Erkennen einer abnormen Motorlast eingestellt oder gesetzt wird. Wird dieser Grenzwert überschritten, wird die Schließbewegung auf eine Öffnungsbewegung umgeschaltet.

Nachteilig bei diesem bekannten Steuerverfahren ist es, daß ebenfalls vorübergehende Störungen bei einer Schließbewegung, die auf äußere Einflüsse oder vorübergehende Schwergängigkeiten des Systems zurückzuführen sind, ohne daß ein Einklemmfall vorliegt, weitestgehend nicht erkannt werden und zu einer Öffnungsbewegung führen, obwohl die Schließbewegung fortgesetzt werden könnte.

Aus der DE 42 14 998 A1 ist ein Verfahren zur Steuerung eines Torantriebs bekannt, der eine Stelleinrichtung, eine mit der Stelleinrichtung verbundene Antriebseinrichtung sowie eine Steuer- und Auswerteelektronik zur Auswertung von Meßsignalen und zur Erzeugung von Steuerbefehlen aufweist. Für die Verstellung eines mittels des Torantriebs betriebenen Tores wird eine Verstellkraft aufgebracht, deren Betrag in Abhängigkeit vom Verstellweg gewählt ist.

Sollte die Verstellkraft einen vorgegebenen Sicherheitsgrenzwert überschreiten, so wird die Antriebseinrichtung abgeschaltet oder die Antriebsrichtung reversiert. Dieser Sicherheitsgrenzwert wird durch die Summe der vom Verstellweg abhängigen Verstellkraft und einer konstanten Zusatzkraft gebildet. Auf diese Weise ist es möglich, Störungen durch Umwelt- oder Jahreszeiteneinflüsse auszugleichen, ohne daß es zu einer vorzeitigen Sicherheitsabschaltung kommt.

Bei diesem bekannten Verfahren werden zwar Störungen durch Umwelt- oder Jahreszeiteneinflüsse berücksichtigt, jedoch wird die Antriebseinrichtung bei jeder Überschreitung des Sicherheitsgrenzwertes abgeschaltet. Auch hier wird eine nur vorübergehende Störung bei einer Schließbewegung, die auf äußere Einflüsse oder vorübergehende Schwierigkeiten des Systems zurückzuführen ist, ohne daß ein Einklemmfall vorliegt, nicht erkannt. Dies führt zu einer Abschaltung bzw. Reversion, obwohl die Schließbewegung fortgesetzt werden könnte.

Aufgabe der vorliegenden Erfindung ist es, ein Verfahren der eingangs genannten Gattung zu schaffen, bei dem über den gesamten Verstellbereich der Stelleinrichtung ein auch härtesten Sicherheitsanforderungen genügender Einklemmschutz gewährleistet ist und ein fehlerhaftes Reversieren oder Anhalten der Stelleinrichtung aufgrund äußerer Einflüsse, variabler Widerstände oder zu geringer Versteflkraft im Verstellbereich möglichst ausgeschlossen wird.

Diese Aufgabe wird erfindungsgemäß durch die Merkmale des Anspruchs 1 gelöst.

Die erfindungsgemäße Lösung gewährleistet über den gesamten Verstellbereich der Stelleinrichtung einen auch schärfsten Sicherheitsanforderungen genügenden Einklemmschutz und stellt gleichzeitig sicher, daß die Stelleinrichtung das elektrisch betriebene Aggregat unabhängig von äußeren Einflüssen und unterschiedlichen Widerständen im Verstellbereich nach Maßgabe der Bedienungsperson mit hnreichender Verstellkraft öffnet bzw. schließt.

Die weitestgehende Eliminierung äußerer Einflüsse sowie unterschiedlicher Widerstände im Verstellbereich gewährleistet, daß auch bei einem Stillstand des elektrisch betriebenen Aggregates trotz eines vorgegebenen Schließimpulses ein geregelter Schließvorgang über ein vorgegebenes Zeitintervall erfolgt, wobei in diesem zusätzlichen Zeitintervall aber der vorgegebene Maximalwert der Verstellkraft nicht überschritten wird, bis entweder eine Weiterbewegung des elektrisch betriebenen Aggregates erfolgt oder bei fortdauerndem Stillstand des elektrisch betriebenen Aggregats die Antriebseinrichtung abgeschaltet wird.

Zur Verstellkraft des elektrisch betriebenen Aggregats proportionale Parameter sind beispielsweise der von der Antriebseinrichtung des elektrisch betriebenen Aggregats aufgenommene Strom oder das von der Antriebseinrichtung abgegebene Drehmoment. Mit der Dynamik der Stelleinrichtung des elektrisch betriebenen Aggregats korrelierte Parameter sind beispielsweise die Geschwindigkeit oder die Beschleunigung der Verstelleinrichtung bzw. des Aggregats.

Die Überschußkraftbegrenzung kann auf einen Teilbereich des Verstellweges begrenzt werden, da beispielsweise beim Öffnen des elektrisch betriebenen Aggregats und in dem an den ganz geöffneten Zustand des Aggregats angrenzenden Bereich ein Einklemmen auch größerer Körperteile nicht zu berücksichtigen ist.

Aus der US 5,410,229 ist eine Schaltungsanordnung zur Steuerung der Geschwindigkeit eines Elektromotors bekannt, bei der der Motor bei Erreichen eines vorgegebenen Gegendrehmoments angehalten wird. Zu diesem Zweck wird der Motorstrom in Pulsbreitenmodulation in Abhängigkeit von der erfaßten Drehzahl des Elektromotors und einem vorgegebenen maximalen Drehmoment gesteuert.

Bei dieser elektronischen Kupplung wird jedoch der Motorstrom ständig unterbrochen, wenn das vorgegebene maximale Drehmoment erreicht wird, so daß bei einer Anwendung für elektrisch betriebene Aggregate in Kraftfahrzeugen beispielsweise eine Schließbewegung unterbrochen würde, wenn aufgrund äußerer Einflüsse das Gegendrehmoment einen entsprechenden Wert erreichen würde, so daß beispielsweise eine Fensterscheibe nicht vollständig geschlossen werden könnte. Andererseits würde bei einem entsprechend hohen Wert des zulässigen Gegendrehmoments eine unzulässige Einkiemmkraft auf ein im Verstellbereich des elektrisch betriebenen Aggregats befindliches Körperteil einwirken, so daß die bekannte Steuerschaltung für den vorliegenden Anwendungsfall ungeeignet wäre.

In der prioritätsälteren DE 196 15 581 A1 ist ein Verfahren zum Ansteuern elektrischer Antriebe in Fahrzeugen mit einem Elektromotor beschrieben, dessen gesteuerter Betrieb durch eine Drehmoment-/Drehzahl-Kennlinie vorgegeben wird und bei dem das wirksame Drehmoment überwacht wird. Bei einem Grenz-Drehmoment, das größer als das normalerweise auftretende und deutlich kleiner als das maximale Drehmoment ist, wird der Antrieb auf ein annähernd konstantes Drehmoment geregelt.

Bei diesem Verfahren wird ein Grenzdrehmoment einmal festgelegt, das heißt es wird ein statischer Grenzwert für das Grenzdrehmoment vorgegeben. Demgegenüber beansprucht die vorliegende Erfindung die Vorgabe eines dynamischen Grenzwertes, der adaptiv eine geringe Überschußkraft berücksichtigt und bei jedem Öffnungs- oder Schließvorgang veränderbar ist, so daß zur Realisierung eines Einklemmschutzes eine beliebig kleine Einklemmkraft gewährleistet wird, ohne daß aufgrund einer zu geringen Verstellkraft in Abhängigkeit vom Verstellweg die Antriebseinrichtung ungewollt zum Stillstand kommt.

Vorzugsweise wird der der Verstellkraft proportionale Parameter auf einen von der Versteliposition abhängigenGrenzwert (Hüllkurve b) geregelt, der der maximal zulässigen Überschußkraft an der jeweiligen Verstellposition entspricht.

Die Grenzwertregelung des Parameters erfolgt innerhalb der vorgegebenen Zeitspanne solange, bis entweder der Parameter den vorgegebenen Grenzwert wieder unterschreitet oder die Stelleinrichtung oder die Antriebseinrichtung zum Stillstand gekommen sind. Die positionsabhängige Regelung der Überschußkraft berücksichtigt dabei die normale zum Versteilen des Aggregats benötigte Verstellkraft, so daß bei entsprechender Begrenzung der Überschußkraft auch im ungünstigsten Fall ein Einklemmzustand stets im ungefährlichen Bereich bleibt.

Vorzugsweise wird die Unterbrechung des an die Antriebseinrichtung abgegebenen Stromes und/oder die Drehrichtungsumkehr der Antriebseinrichtung um ein Zeitintervall $\Delta t0$ verzögert und die Antriebseinrichtung gibt während der Zeitdauer der Verzögerung ein konstantes Drehmoment an die Stelleinrichtung ab.

Vorzugsweise ist das Zeitintervall $\Delta t0$ so bemessen, daß eine einwandfreie Unterscheidung zwischen einem Einklemmfall und einer externen, temporären (dynamischen) Störung getroffen werden kann.

Eine weitere vorteilhafte Ausgestaltung der erfindungsgemäßen Lösung ist dadurch gekennzeichnet, daß der Grenzwert des Parameters um einen vorgegebenen Betrag erhöht wird, wenn die Stelleinrichtung oder die Antriebseinrichtung zum Stillstand gekommen sind und innerhalb der vorgegebenen Zeitspanne ein Steuerimpuls von einer Bedienungseinrichtung abgegeben wird, der das Schließen des elektrisch betriebenen Aggregates bewirkt.

Diese Ausgestaltung der erfindungsgemäßen Lösung sieht eine Erhöhung der Antriebsleistung für den Fall vor, daß während der Zeitdauer der Grenzwertregelung innerhalb des vorgegebenen Zeitintervalls ein erhöhter Sollwert vorgegeben wird, wenn die Bedienungsperson trotz eines Stillstands des elektrisch betriebenen Aggregats einen die Schließbewegung steuernden Schaltimpuls bewirkt, das heißt ein Schließen des elektrisch betriebenen Aggregats herbeiführen will.

Eine vorteilhafte Ausgestaltung der erfindungsgemäßen Lösung ist dadurch gekennzeichnet, daß der Parameter dem einem Elektromotor als Antriebseinrichtung zugeführten Strom entspricht, so daß die Stromaufnahme des Elektromotors auf einen Wert begrenzt wird, der einer maximalen resultierenden Überschußkraft entspricht.

Die Begrenzung der Stromaufnahme des Elektromotors auf einen Wert, der einer maximalen resultierenden Überschußkraft entspricht, kann dadurch erfolgen, daß der Maximalwert des an den Elektromotor abgegebenen Stroms auf einen der maximalen resultierenden Überschußkraft entsprechenden Wert oder bei einer Pulsweitenmodulation des an den Elektromotor abgegebenen Stroms der Spitzenwert, der arithmetische Mittelwert oder quadratische Mittelwert (Effektivwert) des Stroms auf einen der maximalen resultierenden Überschußkraft entsprechenden Wert eingestellt oder der Maximalwert, der arithmetische Mittelwert oder der quadratische Mittelwert des Stromes in Abhängigkeit von der Stellung der Stelleinrichtung vorgegeben wird.

Die Begrenzung der Stromaufnahme des Elektromotors auf einen der maximalen resultierenden Überschußkraft entsprechenden Wert stellt sicher, daß die Stelleinrichtung die gewünschte Verstellbewegung im Verstellbereich auch bei variierenden Gegenkräften durchführt, ohne daß die über die notwendige Verstellkraft hinausgehende Kraft eine Gefahr für im Verstellbereich befindliche Körperteile im Einklemmfall darstellen könnte.

Aus der US 5,268,623 ist eine Schaltungsanordnung zur Steuerung eines Gleichstrommotors mit einer Strombegrenzungseinrichtung bekannt, die den Gleichstrommotor mit Stromblöcken mit variierendem Pulsdauer/Pulspausen-Verhältnis ansteuert und im Falle einer Blockierung des Gleichstrommotors das Pulsdauer/Pulspausen-Verhältnis soweit verringert, daß der Motor nicht überhitzt werden bzw. beim Anlauf des Gleichstrommotors der Anlaufstrom keine zu hohen Werte annehmen kann.

Bei diesem bekannten Steuerverfahren wird zwar bei blockiertem Gleichstrommotor die Stromzufuhr zum Motor nicht unterbrochen, jedoch wird der arithmetische Mittelwert des dem Gleichstrommotor in Pulsweitenmodulation zugeführten Stromes stets auf einen für den Gleichstrommotor ungefährlichen Wert reduziert, wenn ein Blockierzustand auftritt, das heißt jedes als Blockierzustand erkannte Gegendrehmoment führt zu einer Absenkung des Motordrehmoments auf einen festgelegten Wert, so daß auf den vorliegenden Anwendungsfall bezogen ein als Blockierzustand erkanntes Einfahren einer Fensterscheibe in den Dichtungsbereich bei erhöhtem Widerstand kein vollständiges Schließen der Fensterscheibe zur Folge hätte.

Demgegenüber gewährleistet das erfindungsgemäße Verfahren die Durchführung der gewünschten Verstellbewegung in Abhängigkeit von unterschiedlichen, auf dem Verstellweg auftretenden Widerständen bzw. Gegendrehmomenten, da stets eine Überschußkraft sichergestellt ist, die die für die Verstellbewegung erforderliche Kraft um ein vorgegebenes Maß übersteigt. Der Betrag der Überschußkraft kann dabei über den gesamten Verstellweg konstant bleiben, wenn die für die Verstellbewegung erforderliche Antriebskraft den Versteliwiderständen über den Verstellweg angepaßt ist. Diese Überschußkraft ist so bemessen, daß sie an jedem Ort des Verstellweges auch schärfsten Einklemmschutzbedingungen genügt, so daß selbst in kritischen Bereichen sowohl die Vollendung der gewünschten Verstellbewegung als auch ein wirksamer Einklemmschutz gewährleistet sind.

Die Verstellkraft und/oder die Überschußkraft kann nach einem Merkmal des erfindungsgemäßen Verfahrens in Abhängigkeit von der Motorspannung und/oder der Motordrehzahl und/oder der Motortemperatur bzw. der Umgebungstemperatur vorgegeben werden. Das Erfassen dieser Werte ermöglicht die Berücksichtigung äußerer bzw. systemimmanenter Einflüsse bei der Durchführung einer Verstellbewegung unter Berücksichtigung sowohl des Einklemmschutzes als auch einer sicheren Durchführung der Verstellbewegung.

Vorzugsweise wird der Elektromotor auf einem Prüfstand hinsichtlich wenigstens eines charakteristischen Merkmals (z.B. Anstieg der Motorkennlinie) klassifiziert und das wenigstens eine charakteristische Merkmal zur Berechnung einer die Überschußkraft begrenzenden Hüllkurve verwendet.

Eine besonders vorteilhafte Ausgestaltung des erfindungsgemäßen Verfahrens ist dadurch gekennzeichnet, daß die Motorkennlinie des Elektromotors über den Verstellweg der Stelleinrichtung aufgenommen und gespeichert wird, daß ein der maximalen resultierenden Überschußkraft entsprechender Betrag des Stromes zu dem dem jeweiligen Motordrehmoment entsprechenden Motorstrom der Motorkennlinie addiert wird und daß der an den Elektromotor abgegebene Strom über den mindestens einen Teilbereich des Verstellweges auf diesen resultierenden Maximalwert des Stromes begrenzt wird.

Die Begrenzung des maximalen Motordrehmoments und damit die Begrenzung der maximalen Überschußkraft des elektrisch betriebenen Aggregats kann nach diesen Verfahrensmerkmalen durch eine positionsabhängige Festlegung des Maximalwerts der Stromzufuhr zum Elektromotor erfolgen, was in einem definierten "Meßhub" ermittelt wird. Zu diesem Zweck wird die Normalkurve für die Stromaufnahme über die Durchführung einer vollständigen Verstellbewegung in einem Normierungslauf ermittelt und der jeweilige Maximalwert der Stromaufnahme bzw. Stromzufuhr zum Elektromotor unter Berücksichtigung der begrenzten Überschußkraft durch eine Hüllkurve festgelegt, die unter Einbeziehung der verschiedenen Einflußgrößen berechnet wird.

Zu diesen Einflußgrößen gehören beispielsweise die Spannung, die Drehzahl, der Vorwiderstand, die Motor- und Umgebungstemperatur sowie die spezifische Motorkennlinie,die jedem Elektromotor eigen ist und erheblichen Schwankungen unterliegen kann. Diese Motorkennlinie kann gegebenenfalls an einem Motorenprüfstand in der Fertigung individuell ermittelt werden, so daß die Festlegung des maximalen Motorstroms mit einer hinreichenden, einen wirksamen Einklemmschutz berücksichtigenden, begrenzten Überschußkraft individuell an den jeweiligen Elektromotor angepaßt werden kann.

Die resultierende oder maximale Überschußkraft kann wahlweise auch adaptiv an die unterschiedlichen Widerstände im Verstellbereich über die Lebensdauer angepaßt werden, in dem beispielsweise die Stromaufnahme des Elektromotors über den Verstellbereich erfaßt und als Wertepaar mit der jeweiligen Position der Verstelleinrichtung gespeichert wird. Auf diese Weise können Schwergängigkeitsstellen im Hubbereich und/oder Schwergängigkeiten im Bereich eines Dichtungseinlaufs erfaßt und damit adaptiv die für die Verstellbewegung erforderliche Verstellkraft bzw. die resultierende Überschußkraft festgelegt werden.

Eine weitere vorteilhafte Ausgestaltung der erfindungsgemäßen Lösung ist dadurch gekennzeichnet, daß die die Überschußkraft begrenzende Hüllkurve hochgesetzt wird, wenn sich die Geschwindigkeit des elektrisch betriebenen Aggregats nach dem Erreichen des vorgegebenen Grenzwertes durch den Parameter nicht verringert bzw. die negative Beschleunigung einen Grenzwert nicht überschreitet. Dabei kann die Hochsetzung der Hüllkurve um einen vorgegebenen Betrag oder solange erfolgen, bis die Geschwindigkeit des elektrisch betriebenen Aggregats einen bestimmten Wert erreicht hat.

Diese weitere Ausgestaltung der erfindungsgemäßen Lösung soll berücksichtigen, daß aufgrund äußerer Einflüsse oder systembedingter Widerstände im Verstellbereich zwar der der Verstellkraft proportionale Parameter den vorgegebenen Grenzwert erreicht, die Geschwindigkeit des elektrisch betriebenen Aggregats aber nicht vermindert wird bzw. die durch die Widerstände bewirkte Abbremsung des Systems nicht über einen bestimmten Betrag hinausgeht, zu einem Heraufsetzen des Grenzwertes führt, um diese durch äußere Einflüsse oder zusätzliche Widerstände im Verstellbereich bewirkten Schwergängigkeiten zu berücksichtigen.

Durch positionsbezogenes Erfassen von Verzögerungen (Schwergängigkeiten) des elektrisch betriebenen Aggregats und Abspeichern der erfaßten Werte kann der Verlauf der Hüllkurve adaptiv verändert werden.

Eine weitere Ausgestaltung der erfindungsgemäßen Lösung ist dadurch gekennzeichnet, daß bei Erreichen des vorgegebenen Maximalwertes, des arithmetischen Mittelwertes oder des Effektivwertes des vom Elektromotor aufgenommenen Stromes der an den Elektromotor abgegebene Strom unterbrochen und/oder die Drehrichtung des Elektromotors umgekehrt wird.

Erreicht nach diesem Merkmal des erfindungsgemäßen Verfahrens der Motorstrom den festgelegten oder berechneten Maximalwert, wird der Motorstrom begrenzt und konstant gehalten. Diese Ausgestaltung der erfindungsgemäßen Lösung erweist sich immer dann als sinnvoll, wenn eine sichere Unterscheidung zwischen Schwergängigkeitsstellen, beispielsweise beim Dichtungseinlauf, und einem Einklemmzustand nicht möglich ist. Da die Überschußkraft bei begrenztem und konstant gehaltenem Strom aber stets kleiner als ein vorgegebener Grenzwert ist, kann auch für den ungünstigen Fall eines Einklemmzustandes keine Gefährdung des eingeklemmten Körperteils auftreten.

Nach einer weiteren Ausgestaltung des erfindungsgemäßen Verfahrens kann nach Erreichen des festgelegten oder berechneten Maximalwertes des Motorstroms ein sofortiges oder zeitverzögertes Reversieren der Verstelleinrichtung erfolgen, wobei insbesondere das zeitverzögerte Reversieren dazu dient, dynamische Störungen, die beispielsweise infolge kurzzeitiger, negativer Beschleunigungen durch Schlaglöcher oder kurzzeitige Störungen bei einer Hubbewegung des elektrisch betriebenen Aggregats auftreten, auszublenden.

Vorzugsweise wird während der Verzögerung vom Verstellmotor ein konstantes Drehmoment an die Verstelleinrichtung abgegeben.

Nach einer weiteren Ausgestaltung des erfindungsgemäßen Verfahrens kann der Anstieg des Motordrehmoments verzögert werden, so daß die Überschußkraft des elektrisch betriebenen Aggregats nur langsam ansteigt. Eine damit verbundene Begrenzung des Motorstromanstiegs (di/dt) kann vorzugsweise durch ein entsprechendes Schaltelement, wie einem getakteten Halbleiter, einem steuerbaren Widerstand oder dergleichen, realisiert werden.

Eine Pulsweitensteuerung des Motorstroms mittels eines Halbleiterschalters ermöglicht eine Anpassung des festgelegten oder berechneten Maximalwertes des Motorstromes über den gesamten Verstellbereich des elektrisch betriebenen Aggregats in kürzestmöglicher Zeit und damit in kleinen Positionsänderungsschritten. Eine derartige Schaltungsanordnung gewährleistet zudem einen einfachen Aufbau bzw. eine einfache Programmierung der Steuerelektronik unter Berücksichtigung verschiedenster Einflußfaktoren, die zusätzlich erfaßt bzw. im Rahmen einer adaptiven Steuerung berücksichtigt werden können.

Da der Halbleiterschalter vom gleichen Strom durchflossen wird wie der Stellmotor, kann auch ein einfacher Übertemperaturschutz für den Verstellmotor realisiert werden, zumal viele bekannte Leistungs-Halbleiterschalter die eigene Betriebstemperatur erfassen, um eine thermische Zerstörung des Halbleiterschalters auszuschließen. Bei Verwendung eines Halbleiterschalters ohne Temperaturerfassung kann dieser beispielsweise mit einem temperaturabhängigen Widerstand oder dergleichen thermisch gekoppelt werden, um bei Erreichen einer kritischen Temperatur den Halbleiterschalter abzuschalten und die weitere Stromzufuhr zum Verstellmotor damit zu unterbrechen.

Anstelle einer Strommessung zur Regelung des Tastverhältnisses der Pulsweitenmodulation kann das Tastverhältnis aus der Leerlaufdrehzahl, der Istdrehzahl und der Motorkennlinie des Elektromotors berechnet werden und somit eine Einrichtung zur Motorstromerfassung eingespart werden.

Anhand eines in der Zeichnung dargestellten Ausführungsbeispieles soll der der Erfindung zugrundeliegende Gedanke näher erläutert werden. Es zeigen:

Figur 1 - eine schematische Darstellung verschiedener Verstellbereiche bei einem Fensterhebersystem;

Figur 2 - eine grafische Darstellung von zwei verschiedenen Motorkennlinien;

Figur 3 - eine schematische Darstellung einer Schaltungsanordnung zur Steuerung eines Fensterhebersystems;

Figur 4 - eine schematische Darstellung des Motorstroms bzw. Motor-Drehmoments in Abhängigkeit vom Verstellweg eines Fensterhebersystems;

Figur 5 - zeigt eine schematische Darstellung des Motorstroms bzw. Motor-Drehmoments über dem Verstellweg und über der Verstellzeit mit darin eingetragener Grenzwertregelung;

Figur 6 - eine schematische Darstellung der Grenzwertregelung im Falle eines "harten Einklemmens";

Figur 7 - eine schematische Darstellung der Grenzwertregelung im Falle eines "weichen Einklemmens" oder einer Schwergängigkeit im Verstellbereich;

Figur 8 - eine schematische Darstellung der Grenzwertregelung im Falle eines vorübergehenden äußeren Einflusses und

Figur 9 - eine Darstellung zur Ermittlung des Tastverhäitnisses einer Pulsweitenmodulation aus der Leerlaufdrehzahl und der Istdrehzahl eines Elektromotors.

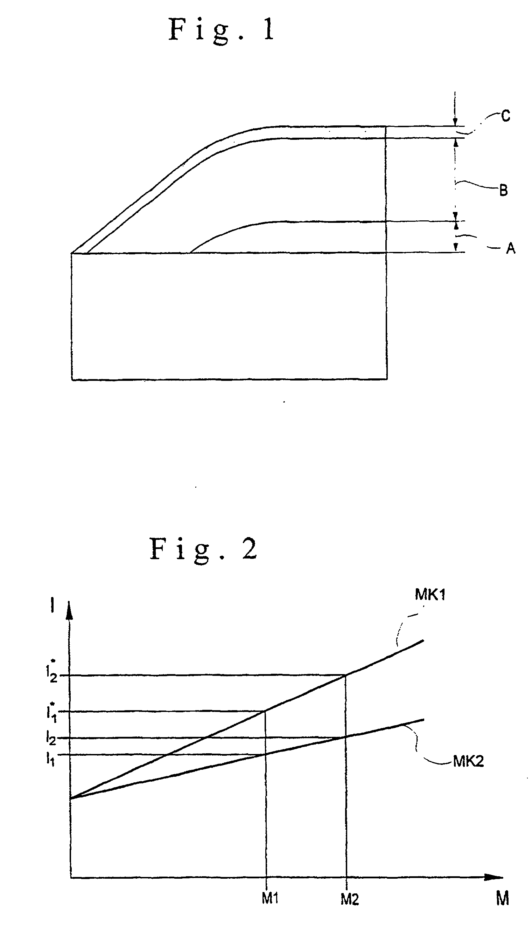

Die in Figur 1 dargestellten Verstellbereiche, die von einer Fensterscheibe beim Öffnen und Schließen der Fensterscheibe in der Tür eines Kraftfahrzeugs durchfahren werden, können grundsätzlich in drei Bereiche unterteilt werden: In einen Bereich A, der von der vollständig geöffneten Fensterscheibe bis zu einer etwa zu einem Drittel geschlossenen Fensterscheibe reicht, einen Bereich B, der sich von der zu einem Drittel geschlossenen Fensterscheibe bis kurz vor ein Einfahren der Fensterscheibe in die Fensterdichtung erstreckt, sowie einen Bereich C, der sich über den Dichtungsbereich erstreckt.

Für einen Einklemmschutz sind grundsätzlich die Bereiche B und C beim Schließen der Fensterscheibe relevant, während im Bereich A aufgrund des großen Abstandes zwischen der Oberkante der Fensterscheibe und dem Türrahmen ein Einklemmen auch größerer Körperteile ausgeschlossen werden kann. Grundsätzlich kann aber auch der Bereich A in die Überwachung und Steuerung für einen Einklemmschutz einbezogen werden.

Während im Teilbereich B sichergestellt sein muß, daß bei einem Einklemmzustand die auf den eingeklemmten Gegenstand oder das eingeklemmte Körperteil einwirkende Kraft einen bestimmten, vorgegebenen Betrag nicht überschreiten darf und das Anheben und Absenken der Fensterscheibe gegen Bewegungswiderstände des Fensterhebersystems und gegebenenfalls äußere Einflüsse gewährleistet sein muß, gelten im Teilbereich C besondere Bedingungen, da hier aufgrund erhöhten Widerstandes beim Einlaufen der Fensterscheibe in die Dichtung einerseits ein sicheres Schließen der Fensterscheibe gewährleistet sein muß und andererseits aus Sicherheitsgründen ein 4mm-Stab erkannt und sicher von den Einflüssen der Verschiebekräfte im Dichtungsbereich unterschieden werden muß.

Bei der Festlegung der erforderlichen Verstellkräfte zum Öffnen und Schließen beispielsweise eines Fensterhebersystems ist neben äußeren Einflüssen wie Umgebungstemperatur, Widerstände beim Durchfahren des Versteilweges, Temperatur des Verstellmotors usw., vor allem die Motorkennliniedes Verstellmotors von Bedeutung, dessen Kennlinie erheblichen Exemplarstreuungen unterliegt.

Figur 2 zeigt an einem schematischen Beispiel die Motorkennlinie von zwei unterschiedlichen Elektromotoren, die zum Erreichen eines übereinstimmenden Motor-Drehmoments M unterschiedliche Motorströme aufnehmen. Für ein positionsabhängiges "normales" Drehmoment M1 benötigt der eine Elektromotor mit der Motorkennlinie MK1 einen positionsabhängigen "normalen" Hubstrom (gegebenenfalls durch die Einflußgrößen gewichtet) von I1, während ein anderer Elektromotor mit der Motorkennlinie MK2 einen positionsabhängigen Hubstrom I1* benötigt.

Bei einem maximal zulässigen Drehmoment M2 benötigt der eine Elektromotor mit der Motorkennlinie MK1 einen maximal zulässigen Strom von $I_2$, während der andere Elektromotor mit der Motorkennlinie MK2 einen maximal zulässigen Strom von I2* aufnimmt. Abhängig von der jeweiligen Motorkennlinie des verwendeten Elektromotors wird die Überschußkraft, die sich aus der Differenz zwischen dem maximal zulässigen Drehmoment und dem positionsabhängigen, normalen Drehmoment ergibt, auf einen vorgegebenen Wert reduziert, der an keiner Stelle des Verstellweges überschritten werden darf.

Beim Erreichen des eingestellten oder berechneten maximalen Stromwertes, der dem jeweils maximal zulässigen Drehmoment bzw. der maximal zulässigen Verstellkraft entspricht, wird die Stromaufnahme des Elektromotors durch ein entsprechendes Schaltelement begrenzt, wodurch das maximale Motordrehmoment und damit die maximale Überschußkraft des in diesem Ausführungsbeispiel dargestellten Fensterhebersystems begrenzt wird.

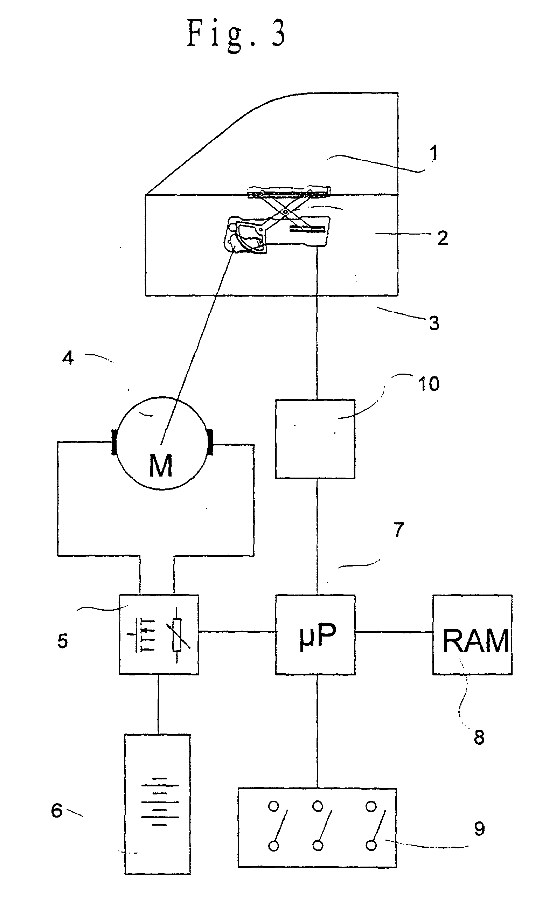

Figur 3 zeigt in einem Blockschaltbild eine Schaltungsanordnung zur Realisierung des erfindungsgemäßen Verfahrens bei einem Fensterheber-Verstellsystem als elektrisch betriebenes Aggregat zum Verstellen einer Fensterscheibe 1 mittels einer Stelleinrichtung 2 im Öffnungsbereich einer Kraftfahrzeugtür 3. Die Stelleinrichtung 2 wird von einem Elektromotor 4 in der einen oder anderen Bewegungsrichtung angetrieben und zu diesem Zweck über eine Schalteinrichtung 5 aus einer Spannungsquelle 6 gespeist, wobei im dargestellten Ausführungsbeispiel durch Umpolen der Spannungsquelle 6 durch die Schalteinrichtung 5 beispielsweise durch Anordnung von Halbleiter-Bauelementen in Brückenschaltung und entsprechende Ansteuerung der in einem Brückenzweig liegenden Halbleiterelemente die Stromrichtung durch den Elektromotor 4 geändert werden kann.

Die Schalteinrichtung 5 kann aus beliebigen Halbleiter-Schaltelementen, wie Transistoren (MOSFETs), Thyristoren sowie aus steuerbaren Widerständen bestehen. Die Ansteuerung der Schalteinrichtung 5 erfolgt durch eine Steuer- und Regelelektronik 7, die vorzugsweise aus einem Mikroprozessor besteht, der mit einem Speicher mit wahlfreiem Zugriff 8 verbunden ist. Der Mikroprozessor ist zusätzlich mit einem Bedienungselement 9 sowie gegebenenfalls mit einer Sensoreinrichtung 10 verbunden, die mit Teilen des Verstellsystems verbundene bzw. sonstige äußere Einflüsse erfassende Sensoren umfaßt, und kann gegebenenfalls die Versorgungsspannung erfassen und überwachen.

Die Steuer- und Regelelektronik 7 steuert die Schalteinrichtung 5 in der Weise an, daß der Motorstrom in der einen oder anderen Flußrichtung pulsweitenmoduliert wird, so daß der arithmetische Mittelwert bzw. der quadratische Mittelwert (Effektivwert) des Motorstromes stufenlos variiert werden kann.

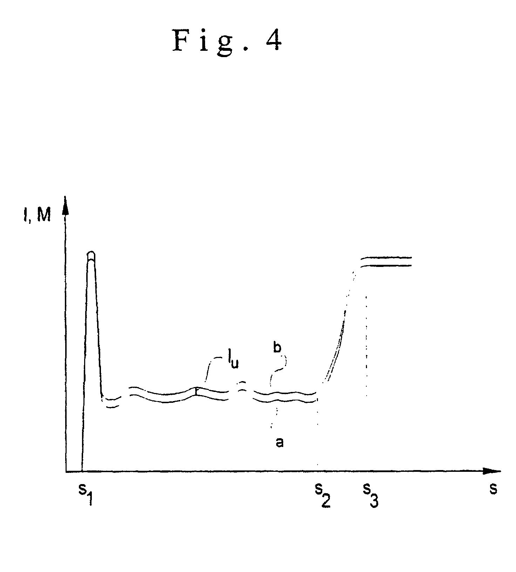

Die von der Steuer- und Regelelektronik 7 an die Schalteinrichtung 5 abgegebenen Steuersignale steuern den Motorstrom in der Weise, daß in den Teilbereichen B und C gemäß Figur 1 sowie gegebenenfalls im Teilbereich A der zum Verstellen der Stelleinrichtung 2 erforderlichen, im allgemeinen vom Ort des Hubweges abhängigen Versteilkraft eine Überschußkraft aufgeprägt wird, deren Größe durch die Steuer- und Regelelektronik 7 begrenzt wird. Ohne die Überschußkraft, der in Figur 4 der Überschußstrom bzw. das Überschußdrehmoment des Elektromotors 4 als Differenz der Kurven a und b entspricht, würde der Elektromotor 4 auf die Stelleinrichtung 2 gerade noch eine solche Kraft ausüben, daß die Stelleinrichtung 2 eine Hubbewegung über einen vorgebbaren Verstellbereich ausführt.

Die Verstellkraft berücksichtigt wahlweise die über den Verstellbereich auftretenden Gegenkräfte oder einen Teil der Gegenkräfte, während die Überschußkraft eine Kraftreserve zur Überwindung eines Teils oder zusätzlicher Gegenkräfte enthält, deren Gesamtbetrag begrenzt wird.

Dabei kann die Überschußkraft eine unterschiedliche Begrenzung in den verschiedenen Teilbereichen eines Gesamt-Verstellweges aufweisen, das heißt im Teilbereich C kann beispielsweise die Überschußkraft auf einen betragsmäßig höheren Wert begrenzt werden als im Teilbereich B, um die zusätzlichen, von äußeren Einflüssen abhängigen Widerstandswerte im Dichtungsbereich zu überwinden und ein sicheres Einfahren der Fensterscheibe in den Dichtungsbereich zu gewährfeisten,

Die Bestimmung der Verstellkraftkurve kann rechnerisch, empirisch oder vorzugsweise mittels eines Probelaufs erfolgen. Dabei kann der Probelauf beispielsweise auf dem Montageband vor einem Einbau der Fahrzeugtür in ein Kraftfahrzeug durchgeführt werden. Der Probelauf berücksichtigt individuelle Streuungen der Antriebsmotoren sowie der beweglichen Teile des elektrisch betriebenen Aggregats und der bei einer Hubbewegung auftretenden Widerstandskräfte.

Eine in Figur 4 schematisch dargestellte Meßkurve, die den vom Verstellmotor aufgenommenen Strom bzw. das abgegebene Drehmoment über der Hubposition darstellt, zeigt bei der Hubposition s1 den Start der Fensterscheibe am unteren Anschlag, bei der Hubposition s2 den Beginn des Einlaufs in die obere Fensterdichtung und bei der Hubposition s3 den Anschlag der Fensterscheibe am oberen Türrahmen.

Anhand der über einen Fensterheberhub durch einen Normierungslauf ermittelten Normalkurve a für die Stromaufnahme des Elektromotors wird der jeweilige Maximalwert der zulässigen Überschußkraft durch eine Hüllkurve festgelegt, die unter Einbeziehung verschiedener Einflußgrößen berechnet wird. Zu diesen Einflußgrößen zählen die Nenndrehzahl des Elektromotors, die Betriebsspannung, der dem Elektromotor vorgeschaltete Vorwiderstand, die Motor- und Umgebungstemperatur sowie die vorstehend erwähnte Motorkennlinie. Diese Hüllkurve begrenzt die Überschußkraft über den gesamten Fensterheberhub bzw. über einen vorgegebenen Teilbereich auf beispielsweise weniger als 100 Newton.

Erreicht im Betrieb der Strom des Elektromotors bei einer Hubbewegung der Fensterscheibe den festgelegten oder berechneten Maximalwert des der Überschußkraft entsprechenden Stromwertes, wird der Strom begrenzt und konstant gehalten. Dies wird beispielsweise durch eine entsprechende Ansteuerung der Schalteinrichtung bei einer Pulsweitenmodulation durch ein konstantes Pulsdauer/Pulspausen-Verhältnis erzielt. Befindet sich bei einer Hubbewegung die Fensterscheibe komplett in der oberen Dichtung, kann unabhängig davon, ob der der maximalen Überschußkraft entsprechende Strom im Dichtungsbereich bereits erreicht und begrenzt wurde, die volle Überschußkraft auf die Fensterscheibe durch Abgabe des maximal zulässigen Stromes entsprechend der Kurve b gemäß Figur 4 erzielt werden.

Das erfindungsgemäße Verfahren gestattet es auf einfache Weise, die resultierende (maximale) Überschußkraft im Fensterheberbetrieb adaptiv an Schwergängigkeitsstellen und/oder Schwergängigkeiten im Dichtungseinlauf anzupassen. Hierzu wird der Strom in Abhängigkeit von der Hubposition bei jeder Betätigung des Fensterhebersystems aufgezeichnet und beispielsweise bei einer vorgegebenen Anzahl von Stromwerten, die der maximalen Überschußkraft in der betreffenden Hubposition entsprechen, der der normalen Verstellkraft entsprechende Stromwert angehoben. In gleicher Weise kann beispielsweise bei sich im Betrieb verringernden Reibwerten das von der Hubposition abhängige Maß der Überschußkraft durch entsprechende Reduzierung des positionsabhängigen Überschußstromes adaptiv vermindert werden.

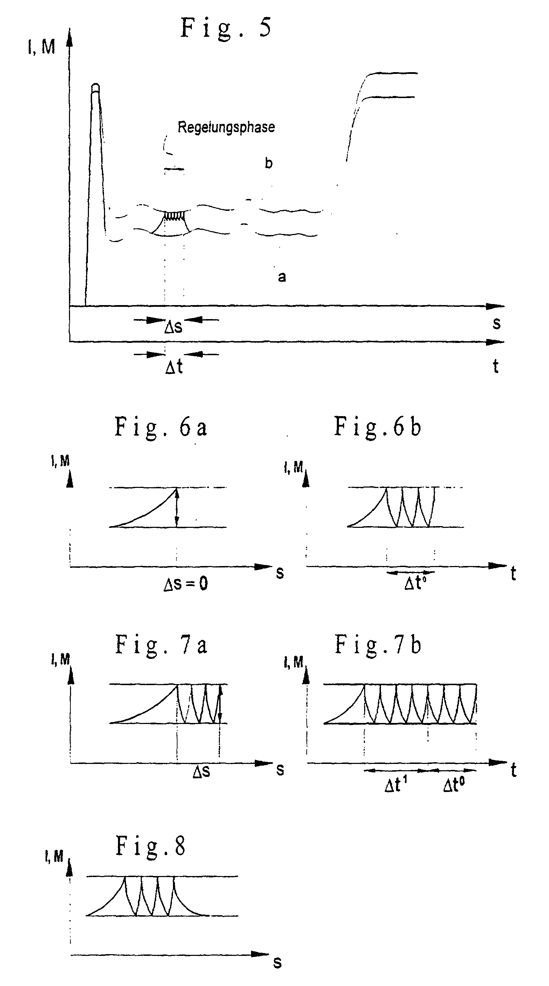

Figur 5 zeigt in schematischer Darstellung den Verlauf des Motorstromes bzw. Motor-Drehmomentes in Abhängigkeit von einem Verstellweg s bzw. der Verstellzeit t mit einer darin zur besseren Erkennbarkeit und zur Erläuterung des erfindungsgemäßen Verfahrens in vergrößertem Maßstab hervorgehobenen Grenzwertregelung. Diese Grenzwertregelung erfolgt über eine Wegstrecke Δs über ein Verstellzeitintervall Δt1 und kann beispielsweise durch einen dynamischen Einfluß, wie ein Schlagloch, eine Querrille, eine geringfügige Schwergängigkeit im Verstellbereich oder dergleichen hervorgerufen werden. In dem vorgegebenen Zeitintervall Δt1, der beginnt, wenn der Motorstrom I zum ersten Mal den durch die Hüllkurve b vorgegebenen Grenzwert erreicht und dessen Dauer fest vorgegeben ist, wird der Motorstrom beispielsweise in Pulsweitenmodulation auf einen konstanten, durch die Hüllkurve b vorgegebenen Maximalwert geregelt, das heißt, in diesem Grenzwert-Regelbereich wird bei Vorliegen eines vorübergehenden dynamischen Gegenmoments das elektrisch betriebene Aggregat mit verminderter Geschwindigkeit bewegt.

Nach Ablauf dieses Zeitintervalls Δt1 wird von dem System die Entscheidung getroffen, ob die Schließbewegung reversiert bzw. der Antrieb angehalten werden soll oder nicht, das heißt die Entscheidung über ein Wirksamwerden eines Abschaltkriteriums bis zum Reversieren bzw. Anhalten des Systems wird zeitverzögert, beispielsweise nach Ablauf von 200 ms, getroffen. Dadurch kann einwandfrei unterschieden werden, ob tatsächlich ein Einklemmfall oder eine vorübergehende, auf das System einwirkende Störung, beispielsweise in Folge eines überfahrenen Schlagloches, vorliegt. In diesem Zeitintervall wird der Motorstrom derart gepulst, daß der vorgegebene Maximalwert nicht überschritten wird, d.h. das elektrisch betriebene Aggregat gibt eine konstante Kraft von beispielsweise weniger als 100 Newton ab, so daß auch bei Auftreten eines tatsächlichen Einklemmfalls keine unzulässig hohen Kräfte auftreten können.

Bei extrem schnellaufenden Motoren ist es dabei jedoch theoretisch denkbar, daß die im Motoranker gespeicherte Rotationsenergie so groß ist, daß der Nachlaufeffekt des Motors zum kurzzeitigen Überschreiten der Kraftgrenze, beispielsweise der 100-N-Grenze, führt. Diese Rotationsenergie wird ebenso wie die kinetische Energie des elektrisch betriebenen Aggregats wie einer Fensterscheibe gegen die Erdbeschleunigung, die Reibung und durch Deformation des Hindernisses, beispielsweise eines eingeklemmten Körperteils oder einer Kraftmeßdose, abgebaut.

Durch ein sehr kurzes Gegensteuern über eine Zeitdauer von beispielsweise 5 ms kann der Motor definiert gebremst werden bevor der Grenzwert (Hüllkurve b) erreicht wurde. Daran anschließend kann das vorstehend beschriebene Verfahren weiter angewendet werden.

Das in Figur 5 schematisch dargestellte Regelverfahren soll nachfolgend anhand von drei Fallunterscheidungen näher erläutert werden.

Figur 6 zeigt in einer schematischen Darstellung des Motorstromes bzw. Motordrehmomentes über den Verstellweg (Figur 6a) sowie über der Verstellzeit (Figur 6b) den Fall eines "harten Einklemmens", das heißt das Einklemmen eines Gegenstandes oder eines Körperteils mit sofortigem Stillstand des elektrisch betriebenen Aggregats. In diesem Fall beträgt die nach dem Erreichen des vorgegebenen Grenzwertes des Motorstroms, der dem Maximalwert der Überschußkraft entspricht, zurückgelegte Wegstrecke $\Delta s = 0$, das heißt die Motorstromregelung auf den vorgegebenen Grenzwert durch Pulsweitenmodulation führt zu keiner weiteren Verstellung des elektrisch betriebenen Aggregats, obwohl die Regelung über den Zeitintervall $\Delta t0$ weiterhin erfolgt. Nach diesem Zeitintervall $\Delta t0$ von beispielsweise 0,5 Sekunden wird die Antriebseinrichtung abgeschaltet und gegebenenfalls zusätzlich reversiert, wenn sich das elektrisch betriebene Aggregat im Sicherheitsbereich befindet.

Für den in Figur 7 dargestellten Fall des "weichen Einklemmens" oder Vorliegens einer Schwergängigkeit im Verstellbereich wird eine Pulsweitenmodulation auf den vorgegebenen Grenzwert vorgenommen, wenn der Motorstrom diesen durch die Hüllkurve vorgegebenen Grenzwert, der der maximalen Überschußkraft entspricht, erreicht hat. Diese über eine Zeitspanne $\Delta t1$ erfolgende Grenzwertregelung führt zu einer verminderten Geschwindigkeit des elektrisch betriebenen Aggregats, das in diesem Intervall die Verstellstrecke $\Delta s$ zurücklegt. Erst wenn nach dem Zeitintervall $\Delta t1$ das elektrisch betriebene Aggregat zum vollständigen Stillstand kommt oder seine Geschwindigkeit unter einen festgelegten Grenzwert abfällt, wird das Abschaltkriterium initiiert, das heißt nach dem Zeitintervall $\Delta t1$ wird eine Grenzwertregelung über den vorgegebenen Zeitraum $\Delta t0$ vorgenommen.

Figur 8 zeigt den in Figur 5 schematisch dargestellten Fall eines äußeren dynamischen Einflusses, wie er beispielsweise durch ein Schlagloch, eine Querrille oder eine kleine Schwergängigkeit im Verstellbereich auftreten kann, in vergrößertem Maßstab.

In diesem Fall wird bei fortlaufender Verstellung des elektrisch betriebenen Aggregats eine Pulsweitenmodulation des Motorstroms durchgeführt, nachdem dieser den vorgegebenen Grenzwert erreicht hat. Da trotz Erreichens des Grenzwertes bzw. der die maximale Überschußkraft repräsentierenden Hüllkurve kein Stillstand des elektrisch betriebenen Aggregats erfofgt bzw. wieder eine vorgegebene Grenzgeschwindigkeit nicht unterschritten wird, wird auch das Abschaltkriterium nicht initiiert.

Bei Erreichen eines der maximalen Überschußkraft entsprechenden Stromwertes wird der der resultierenden Überschußkraft entsprechende Stromwert weitestgehend konstant gehalten und nach einer festgelegten Zeitspanne $\Delta t0$ die Antriebseinrichtung zeitverzögert abgeschaltet oder reversiert.

Wird der der maximalen Überschußkraft entsprechende Stromwert erreicht, wird im Unterschied zu bekannten Einklemmschutzverfahren nicht davon ausgegangen, daß es sich um einen Einklemmfall handelt. Stattdessen wird die Verstellkraft bzw. die Überschußkraft vorzugsweise nach Maßgabe einer Hüllkurve begrenzt und ein der Verstellkraft proportionaler Parameter wie beispielsweise der von der Antriebseinrichtung des elektrisch betriebenen Aggregats aufgenommene Strom oder das von der Antriebseinrichtung abgegebene Drehmoment auf einen vorgegebenen Grenzwert der Verstell- oder Überschußkraft geregelt. In dieser Regelungsphase wird ein mit der Dynamik der Stelleinrichtung des elektrisch betriebenen Aggregats korrelierter Parameter wie die Geschwindigkeit oder die Beschleunigung der Verstelleinrichtung bzw. des Aggregats überwacht und abhängig von dem Verhalten des Aggregats beispielsweise die weitere Schließ- oder Hubbewegung fortgesetzt, die Antriebseinrichtung stillgesetzt oder reversiert. Ein Reversieren wird beispielsweise in einem Versteilbereich durchgeführt, bei dem die Scheibenöffnung, z.B. größer als 4 mm ist. Von einem Reversieren des Motors kann abgesehen und stattdessen ein Motorstop mit reduziertem Moment vorgesehen werden, wenn beispielsweise die Scheibenöffnung weniger als 4 mm beträgt oder die Fensterscheibe den Bereich des unteren Anschlages erreicht hat.

Grundsätzlich kann auf ein Reversieren verzichtet werden, wenn insbesondere eine sichere Unterscheidung zwischen einem Dichtungseinlauf und einem Einklemmfall nicht getroffen werden kann, da nach der Erfindung die auf ein eingeklemmtes Körperteil oder einen Gegenstand einwirkende Einklemmkraft stets kleiner als die zu einer Verletzung führende Kraft ist.

Das insbesondere zeitverzögerte Reversieren ermöglicht es, dynamische Störungen, die beispielsweise durch kurzzeitige negative Beschleunigungen beim Überfahren von Schlaglöchern oder durch kurzzeitige Störungen im Fensterheberhub auftreten können, auszublenden. Während der Verzögerung wird die Schalteinrichtung von der Steuerelektronik so angesteuert, daß der Elektromotor ein konstantes Drehmoment an die Stelleinrichtung, das heißt die Fensterhebermechanik abgibt.

In manchen Anwendungsfällen ist es sinnvoll, den Anstieg des Motor-Drehmoments zu begrenzen, um beispielsweise ein hartes Einklemmen zu verhindern. Durch eine Begrenzung des Anstiegs des Motor-Drehmoments steigt die vorgegebene resultierende Überschußkraft des Fensterhebers sehr langsam an. Dies kann beispielsweise durch eine Begrenzung des Stromanstiegs (di/dt) realisiert werden.

Mit der erfindungsgemäßen Lösung können auch schärfste Einklemmschutzbedingungen bezüglich einer hohen Fehlerrate des Meßwertaufnehmers (z.B. mit 65 N/mm) sicher eingehalten werden. Weiterhin gewährleistet die erfindungsgemäße Lösung eine bessere Funktionalität bei einem Softstop (vor dem unteren Anschlag) und bei einem Sanfteinlauf (Dichtungseinlauf mit reduzierter Überschußkraft).

Die Hüllkurve wird beispielsweise in Abhängigkeit von der Betriebsspannung, der Lage der Motorkennlinie im Streufeld, der aktuellen Motorgeschwindigkeit (Motorstrom), der Motorspannung und der Motor- und Umgebungstemperatur angepaßt bzw. berechnet. Außerdem werden Veränderungen der Verschiebekräfte über die Lebensdauer berücksichtigt und die Hüllkurve ständig adaptiv angepaßt.

Im Betrieb bekommt der Verstellmotor nur soviel Strom, daß er nicht mehr leisten kann als durch die Hüllkurve b vorgegeben wird. Dadurch wird es möglich, in dem Bereich des Dichtungsverlaufs auf eine Reversierfunktion zu verzichten, da aufgrund der Überschußkraftbegrenzung beim Einklemmen eines dünnen Gegenstandes (z.B. eines Fingers) eine akute Gefährdung nicht auftreten kann. Damit ist es nicht mehr notwendig, zwischen einem Einklemmfall oder einer Schwergängigkeit des Systems zu unterscheiden.

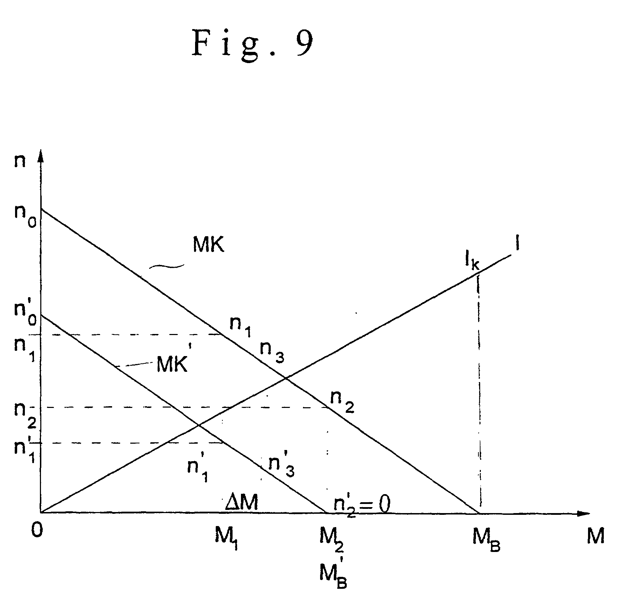

Anstelle einer Regelung des Tastverhältnisses der Pulsweitenmodulation mittels Auswertung des Motorstromes unter Einbeziehung der Motorkennlinie können die Sollwerte für die Pulsweitenmodulation aus der Leerlauf- und Ist-Drehzahl des Elektromotors unter Einbeziehung der Motorkennlinie errechnet werden, so daß keine Motorstrommessung mit zusätzlichenEinrichtungen und damit Kosten erforderlich ist. Figur 9 zeigt schematisch ein Verfahren, wie das Tastverhältnis der Pulsweitenmodulationssteuerung durch Verschieben der Motorkennlinie so bestimmt werden kann, daß sich eine vorgegebene Überschußkraft einstellt.

Die Berechnung der Pulsweitenmodulationswerte erfolgt nur mit Hilfe der Leerlaufdrehzahl und der Ist-Drehzahl des Motors in Anlehnung an seine Motorkennlinie. In Figur 9 ist die Drehzahl n über dem Drehmoment M aufgetragen und ergibt eine für den Elektromotor charakteristische Motorkennlinie MK, die einer Geradengleichung genügt, deren Schnittpunkt mit der Ordinate des Koordinatensystems die Leerlaufdrehzahl $n_0$, bei der das Drehmoment M=0 ist, während der Schnittpunkt mit der Abszisse das Drehmoment MB ergibt, bei dem die Motordrehzahl n=0 ist. Mit dem Anstieg A=n0/MB der Kennliniengeraden ergibt sich für Zwischenwerte der Drehzahl n:

$$n_{1,2} = n_0 - \frac{n_0}{M_B} * M_{1,2}$$

Wird die Einklemmkraft auf einen Wert begrenzt, der gleich dem zur Drehzahl n2 gehörenden Drehmoment M2 ist, so ergibt sich die zum Nullpunkt des Koordinatensystems parallel zur Geraden MK verschobene Gerade MK', deren Schnittpunkt mit der Ordinate die Leerlaufdrehzahl n0', deren Schnittpunkt mit der Abszisse das Grenzmoment MB' und deren Steigung A = no'/MB' ist. Dazwischenliegende Drehmoment/Drehzahlwerte ergeben sich zu

$$n_{1,2}' = n_0' - \frac{n_0'}{M_B} * M_{1,2}$$

Bei $n_2'=0$ gilt

$$n_0' = \frac{n_0'}{M_B'} * M_2$$

sowie bei $M_2$

$$n_0 = n_2 + \frac{n_0}{M_B} * M_2 = n_2 + * M_2$$

$$M_2 = \frac{n_0 - n_2}{A}$$

$$\frac{n_0}{n_0'} = \frac{n_2 + A * M_2}{A * M_2} = \frac{n2}{A * M_2} + 1 = \frac{n2}{n_0 - n_2} + 1$$

Aufgrund der Proportionalität zwischen der Drehzahl n und der Motorspannung U, die wiederum proportional zum Tastverhältnis der Pulsweitenmodulation ist, folgt:

$$\frac{PWM\ alt}{PWM\ neu} = \frac{n_0}{n_0'} \qquad PWM\ neu = \frac{PWM\ alt * (n_0 - n_2)}{n_0}$$

Für eine Drehzahl n3 auf der Begrenzungsgeraden gilt somit

$$n_3' = n_0' - A * (M_1 + \Delta M) = n_0 - n_2 - A * (M_1 + \Delta M)$$

Bewegt sich der Motor nach der Spannungsreduzierung (eingestellte Überschußkraft) weiter, wird er nach einer vorgegebenen Zeit von beispielsweise 200 ms wieder mit voller Kraft betrieben. Bleibt der Motor dagegen für diese Zeit stehen, bedeutet dies einen Einklemmvorgang und der Motor wird umgepolt, das heißt das elektrisch betriebene Aggregat wird reversiert. Dadurch werden die Rüttelempfindlichkeit verbessert und die Einklemmkräfte reduziert.

Da der Motor allerdings gebremst wird, wenn die Nachführwerte überschritten werden, ist ein ungleichmäßiger Lauf des elektrisch betriebenen Aggregats bei Schwergängigkeiten die Folge. Um dies zu verhindern, ist ein vorstehend beschriebenes adaptives System vorgesehen, das positionsbezogen die Schwergängigkeiten lernt und abspeichert. Bei Anlauf dieser Stellen werden die Nachführkräfte (Hüllkurve) erhöht und damit die Unregelmäßigkeiten kompensiert.

**Patentansprüche**

1. Verfahren zur elektrischen Steuerung und Regelung der Bewegung von elektrisch betriebenen Aggregaten mit einer Stelleinrichtung, die mit einer Antriebseinrichtung verbunden ist, und mit einer Steuer- und Regelelektronik zur Auswertung von Meßsignalen und zur Erzeugung von Steuerbefehlen, insbesondere für Verstelleinrichtungen mit einer Einklemmschutzvorrichtung für Fensterheber, Schiebedächer oder dergleichen in Kraftfahrzeugen, wobei zumindest in einem Teilbereich des Verstellweges die Verstellkraft des elektrisch betriebenen Aggregates auf einen vom Verstellweg abhängigen Grenzwert begrenzt wird,
**dadurch gekennzeichnet,**
**daß** ein der Verstellkraft des elektrisch betriebenen Aggregates (1) proportionaler Parameter (I, M) bei Erreichen dieses Grenzwertes auf einen diesem Grenzwert etwa entsprechenden Wert geregelt wird und daß während der Regelungsphase ein mit der Dynamik der Stelleinrichtung (2) korrelierter Parameter überwacht, in der Steuer- und Regelelektronik bewertet und daraus das weitere Steuerungs- und Regelungsverhalten generiert wird.

2. Verfahren nach Anspruch 1, **dadurch gekennzeichnet, daß** der der Verstellkraft proportionale Parameter (I, M) auf einen von der Verstellposition abhängigen Grenzwert (b) geregelt wird, der der maximal zulässigen Überschußkraft an der jeweiligen Verstellposition entspricht, wobei unter der maximal zulässigen Überschußkraft die Kraft verstanden wird, die die zum Verstellen der Stelleinrichtung (2) benötigte Kraft übersteigt.

3. Verfahren nach Anspruch 1 oder 2, **dadurch gekennzeichnet, daß** die Regelung des Parameters (I, M) auf den Grenzwert innerhalb einer vorgegebenen Zeitspanne ($\Delta t0$, $\Delta t1$) solange erfolgt, bis der Parameter den vorgegebenen Grenzwert wieder unterschreitet.

4. Verfahren nach mindestens einem der vorangehenden Ansprüche, **dadurch gekennzeichnet, daß** die Regelung des Parameters (I, M) auf den Grenzwert solange erfolgt, bis die Stelleinrichtung (2) oder die Antriebseinrichtung (4) zum Stillstand gekommen sind.

5. Verfahren nach mindestens einem der vorangehenden Ansprüche, **dadurch gekennzeichnet, daß** die Unterbrechung des an die Antriebseinrichtung (4) abgegebenen Stromes und/oder die Drehrichtungsumkehr der Antriebseinrichtung (4) um ein Zeitintervall ($\Delta t0$) verzögert wird und die Antriebseinrichtung (4) während der Zeitdauer der Verzögerung ein konstantes Drehmoment an die Stelleinrichtung (2) abgibt.

6. Verfahren nach Anspruch 5, **dadurch gekennzeichnet, daß** das Zeitintervall ($\Delta t0$) so bemessen ist, daß eine einwandfreie Unterscheidung zwischen einem Einklemmfall und einer externen, temporären dynamischen Störung getroffen werden kann.

7. Verfahren nach mindestens einem der vorangehenden Ansprüche, **dadurch gekennzeichnet, daß** der Grenzwert des Parameters (I, M) um einen vorgegebenen Betrag erhöht wird, wenn die Stelleinrichtung (2) oder die Antriebseinrichtung (4) zum Stillstand gekommen sind und innerhalb der vorgegebenen Zeitspanne ($\Delta t0$) ein Steuerimpuls von einer Bedienungseinrichtung abgegeben wird, der das Schließen des elektrisch betriebenen Aggregates (1) bewirkt.

8. Verfahren nach mindestens einem der vorangehenden Ansprüche, **dadurch gekennzeichnet, daß** der Parameter dem einem Elektromotor (4) als Antriebseinrichtung zugeführten Strom (I) entspricht.

9. Verfahren nach mindestens einem der vorangehenden Ansprüche, **dadurch gekennzeichnet, daß** zumindest im Regelbereich eine Pulsweitenmodulation des an den Elektromotor (4) abgegebenen Stromes erfolgt, und daß der Maximalwert, der arithmetische Mittelwert oder der quadratische Mittelwert, also der Effektivwert des Stromes auf einen vom Verstellweg abhängigen, der maximal zulässigen, resultierenden Überschußkraft entsprechenden Grenzwert geregelt wird.

10. Verfahren nach mindestens einem der vorangehenden Ansprüche, **dadurch gekennzeichnet, daß** der vom Verstellweg abhängige Maximalwert, der arithmetische Mittelwert oder der Effektivwert des Stromes (I) in Abhängigkeit von der Motorspannung und/oder der Motordrehzahl und/oder der Motortemperatur und/oder der Umgebungstemperatur vorgegeben wird.

11. Verfahren nach mindestens einem der vorangehenden Ansprüche, **dadurch gekennzeichnet, daß** der dem Elektromotor (4) zugeführte Strom zum kurzzeitigen, definierten Abbremsen des Elektromotors (4) umgepolt wird.

**12.** Verfahren nach mindestens einem der vorangehenden Ansprüche, **dadurch gekennzeichnet, daß** der Elektromotor (4) in einem Prüfstand hinsichtlich wenigstens eines charakteristischen Merkmals (z. B. Anstieg der Motorkennlinie) klassifiziert wird und daß das wenigstens eine charakteristische Merkmal zur Berechnung der vom Verstellweg abhängigen Grenzwerte, die die Überschußkraft begrenzende Hüllkurve (b) bilden, verwendet wird.

**13.** Verfahren nach Anspruch 12, **dadurch gekennzeichnet, daß** der Verlauf der Hüllkurve (h) adaptiv verändert wird, indem Verzögerungen (Schwergängigkeiten) des elektrisch betriebenen Aggregats (1) positionsbezogen erfaßt und abgespeichert werden.

**14.** Verfahren nach mindestens einem der vorangehenden Ansprüche, **dadurch gekennzeichnet, daß** den Verstellpositionen über den Verstellweg Parameter der Motorkennlinie des Elektromotors (4) zugeordnet und in der Steuer- und Regelelektronik gespeichert werden, und daß darauf basierend die die Überschußkraft begrenzende Hüllkurve (b) berechnet wird.

**15.** Verfahren nach mindestens einem der vorangehenden Ansprüche, **dadurch gekennzeichnet, daß** ein der maximalen resultierenden Überschußkraft entsprechenderBetrag des Stromes (I) zu dem dem jeweiligen Motordrehmoment entsprechenden Motorstrom der Motorkennlinie addiert wird und daß der an den Elektromotor (4) abgegebene Strom über den mindestens einen Teilbereich des Verstellweges auf diesen resultierenden Maximalwert des Stromes begrenzt wird.

**16.** Verfahren nach mindestens einem der vorangehenden Ansprüche, **dadurch gekennzeichnet, daß** die die Überschußkraft begrenzende Hüllkurve (b) hochgesetzt wird, wenn sich die Geschwindigkeit des elektrisch betriebenen Aggregats (1) nach dem Erreichen des vorgegebenen Grenzwertes durch den Parameter (I, M) nicht verringert bzw. die negative Beschleunigung einen Grenzwert nicht überschreitet.

**17.** Verfahren nach Anspruch 16, **dadurch gekennzeichnet, daß** die Hochsetzung der Hüllkurve (b) um einen vorgegebenen Betrag erfolgt.

**18.** Verfahren nach Anspruch 16, **dadurch gekennzeichnet, daß** die Hochsetzung der Hüllkurve (b) solange erfolgt, bis die Geschwindigkeit des elektrisch betriebenen Aggregats (1) einen bestimmten Wert erreicht hat.

**19.** Verfahren nach mindestens einem der vorangehenden Ansprüche, **dadurch gekennzeichnet, daß** der Anstieg der Stromaufnahme (di/dt) des Elektromotors (4) verzögert und/oder begrenzt wird.

**20.** Verfahren nach mindestens einem der vorangehenden Ansprüche, **dadurch gekennzeichnet, daß** das Tastverhältnis der Pulsweitenmodulation aus der Leerlaufdrehzahl, der Istdrehzahl und der Motorkennlinie des Elektromotors (4) berechnet wird.

## Claims

**1.** Method for the electric control and regulation of the movement of electrically operated assemblies with a setting device which is connected to a drive device, and with control and regulating electronics for evaluating measured signals and for producing control commands, more particularly for displacement devices with an anti-jam protection device for window lifters, sliding roofs or the like in motor vehicles wherein at least in a partial area of the displacement path the displacement force of the electrically operated assembly is restricted to a boundary value dependent on the displacement path **characterised in that**
a parameter (I, M) proportional to the displacement force of the electrically operated assembly (1) is regulated on reaching this boundary value to a value corresponding approximately to this boundary value, and that during the regulating phase a parameter correlated with the dynamic of the setting device (2) is monitored, evaluated in the control and regulating electronics and from this the further control and regulating behaviour is generated.

**2.** Method according to claim 1 **characterised in that** the parameter (I, M) proportional to the displacement force is regulated to a boundary value (b) dependent on the displacement position, which corresponds to the maximum permissible excess force at the relevant displacement position whereby by the maximum permissible excess force is meant the force which exceeds the force required for displacing the setting device (2).

**3.** Method according to claim 1 or 2 **characterised in that** the regulation of the parameter (I, M) to the boundary value inside a predetermined time span ($\Delta t0, \Delta t1$) takes place until the parameter again understeps the predetermined boundary value.

**4.** Method according to at least one of the preceding claims **characterised in that** the regulation of the parameter (I,M) to the boundary value takes place until the setting device (2) or the drive device (4) has come to a standstill.

5. Method according to at least one of the preceding claims **characterised in that** the interruption of the current delivered to the drive device (4) and/or the change of rotary direction of the drive device (4) is delayed by a time interval ($\Delta t0$) and the drive device (4) during the duration of the delay delivers a constant torque to the setting device (2).

6. Method according to claim 5 **characterised in that** the time interval ($\Delta t0$) is measured so that a satisfactory differentiation can be made between a jammed state and an external temporary dynamic disturbance.

7. Method according to at least one of the preceding claims **characterised in that** the boundary value of the parameter (I,M) is increased by a predetermined amount when the setting device (2) or the drive device (4) are brought to a standstill and within the predetermined time span ($\Delta t0$) a control impulse is delivered by an operating device which causes the closing of the electrically operated assembly (1).

8. Method according to at least one of the preceding claims **characterised in that** the parameter corresponds to the current (I) supplied to an electric motor (4) as drive device.

9. Method according to at least one of the preceding claims **characterised in that** a pulse width modulation of the current delivered to the electric motor (4) takes place at least in the regulating area, and that the maximum value, the arithmetic value or the quadratic mean value, thus the effective value of the current is regulated to a boundary value dependent on the displacement path and corresponding to the maximum permissible resulting excess force.

10. Method according to at least one of the preceding claims **characterised in that** the maximum value dependent on the displacement path, the arithmetic mean value or the effective value of the current (I) is predetermined in dependence on the motor voltage and/or the motor speed and/or the motor temperature and/or the surrounding temperature.

11. Method according to at least one of the preceding claims **characterised in that** the current supplied to the electric motor (4) changes pole for the temporary defined braking of the electric motor (4).

12. Method according to at least one of the preceding claims **characterised in that** the electric motor (4) is classified in a test station with regard to at least one characteristic feature (e.g. rise of motor characteristic line) and that the at least one characteristic feature is used for calculating the boundary values dependent on the displacement path and which form the envelope curve (b) restricting the excess force.

13. Method according to claim 12 **characterised in that** the path of the envelope curve (h) is adaptively changed **in that** positions of decelerations (heavy going) of the electrically operated assembly (1) are detected and stored.

14. Method according to at least one of the preceding claims **characterised in that** parameters of the motor characteristic line of the electric motor (4) are associated with displacement positions over the displacement path and are stored in the control and regulating electronics and that the envelope curve (b) restricting the excess force is calculated based on these.

15. Method according to at least one of the preceding claims **characterised in that** an amount of the current (I) corresponding to the maximum resulting excess force is added to the motor current of the motor characteristic line corresponding to the relevant motor torque and that the current delivered at the electric motor (4) is restricted over the at least one partial area of the displacement path to this resulting maximum value of the current.

16. Method according to at least one of the preceding claims **characterised in that** the envelope curve (b) restricting the excess force is raised up when the speed of the electrically operated assembly (1) is not reduced after reaching the predetermined boundary value through the parameter (I, M) or the negative acceleration does not exceed a boundary value.

17. Method according to claim 16 **characterised in that** the raising up of the envelope curve (b) takes place by a predetermined amount.

18. Method according to claim 16 **characterised in that** the raising up of the envelope curve (b) takes place up until the speed of the electrically operated assembly (1) has reached a certain value.

19. Method according to at least one of the preceding claims **characterised in that** the rise of the current collection (di/dt ) of the electric motor (4) is delayed and/or restricted.

20. Method according to at least one of the preceding claims, **characterised in that** the scanning ratio of the pulse width modulation is calculated from the idling speed, the actual speed and the motor characteristic line of the electric motor (4).

## Revendications

1. Procédé de commande et de régulation électriques du déplacement de modules mûs électriquement, comportant un dispositif de réglage qui est relié à un dispositif d'entraînement, et comportant un système électronique de commande et de régulation pour évaluer des signaux de mesure et produire des instructions de commande notamment pour des dispositifs de déplacement, comportant un dispositif de protection contre un coincement pour des lève-glaces, des toits coulissants et analogues dans des véhicules automobiles, et selon lequel au moins dans une partie du trajet de déplacement, la force de déplacement du module mû électriquement est limitée à une valeur limite qui dépend de la course de déplacement,
   **caractérisé en ce**
   **qu'**un paramètre (I,M), qui est proportionnel à la force de déplacement du module mû électriquement (1), est réglé, une fois que cette limite est atteinte, à une valeur qui correspond approximativement à cette limite et que pendant la phase de régulation, un paramètre corrélé à la dynamique du dispositif de réglage (2) est contrôlé, et est évalué dans l'unité électronique de commande et de régulation et qu'à partir de là le comportement ultérieur de commande et de régulation est produit.

2. Procédé selon la revendication 1, **caractérisé en ce que** le paramètre (I,M), qui est proportionnel à la force de déplacement, est réglé sur une valeur limite (b), qui dépend de la position de déplacement et qui correspond à la force excessive maximale admissible au niveau de la position de déplacement respective, auquel cas il faut comprendre sous l'expression force excessive maximale admissible qu'il s'agit de la force qui dépasse la force nécessaire pour déplacer le dispositif de réglage (2).

3. Procédé selon la revendication 1 ou 2, **caractérisé en ce que** la régulation du paramètre (I,M) s'effectue sur la valeur limite en l'espace d'un intervalle de temps prédéterminé ($\Delta t0,\Delta t1$) jusqu'à ce que le paramètre tombe au-dessous de la valeur limite prédéterminée.

4. Procédé selon au moins l'une des revendications précédentes, **caractérisé en ce que** la régulation du paramètre (I,M) s'effectue sur la valeur limite, jusqu'à ce que le dispositif de réglage (2) ou le dispositif d'entraînement (4) se soit arrêté.

5. Procédé selon au moins l'une des revendications précédentes, **caractérisé en ce que** l'interruption du courant délivré au dispositif d'entraînement (4) et/ou l'inversion du sens de rotation du dispositif d'entraînement (4) est retardé d'un intervalle de temps ($\Delta t0$) et que le dispositif d'entraînement (4) délivre, pendant la durée du retard, un couple constant au dispositif de réglage (2).

6. Dispositif selon la revendication 5, **caractérisé en ce que** l'intervalle de temps ($\Delta t0$) est dimensionné de telle sorte qu'un dépassement net vers le bas peut être considéré comme se situant entre un cas de coincement et une perturbation dynamique externe temporaire.

7. Procédé selon au moins l'une des revendications précédentes, **caractérisé en ce que** la valeur limite du paramètre (I,M) est accrue d'une valeur absolue prédéterminée lorsque le dispositif de réglage (2) ou le dispositif d'entraînement (4) s'est arrêté, et que pendant l'intervalle de temps prédéterminé ($\Delta t0$) est délivrée, à un dispositif de service, une impulsion de commande qui déclenche la fermeture du module (1) mû électriquement.

8. Procédé selon au moins l'une des revendications précédentes, **caractérisé en ce que** le paramètre correspond au courant (I) envoyé à un moteur électrique (4) en tant que dispositif d'entraînement.

9. Procédé selon l'une au moins des revendications précédentes, **caractérisé en ce qu'**une modulation d'impulsions en durée du courant délivré au moteur électrique (4) s'effectue au moins dans la plage de régulation et que la valeur maximale, la valeur moyenne arithmétique ou la valeur moyenne quadratique, c'est-à-dire la valeur effective du courant est réglée sur une valeur limite qui dépend de la course de déplacement et qui correspond à la force en excès maximale admissible, qui en résulte.

10. Procédé selon l'une des revendications précédentes, **caractérisé en ce que** la valeur maximale, qui dépend de la course de déplacement, la valeur moyenne arithmétique ou la valeur efficace du courant (I) est prédéterminée en fonction de la tension du moteur et/ou de la vitesse de rotation du moteur et/ou de la température du moteur.

11. Procédé selon au moins l'une des revendications précédentes, **caractérisé en ce que** la polarité du courant envoyé au moteur électrique (4) est inversée pour réaliser un freinage défini, de brève durée, du moteur électrique (4).

12. Procédé selon au moins l'une des revendications précédentes, **caractérisé en ce que** le moteur électrique (4) est placé sur un bain d'essais en ce qui concerne au moins un élément caractéristique (par exemple la montée de la courbe caractéristique du moteur) et qu'au moins un élément caractéristique est utilisé pour calculer les valeurs limites, qui dépendent de la course de réglage de déplacement et forme la courbe enveloppe (b) qui limite la force en excès.

**13.** Procédé selon la revendication 12, **caractérisé en ce que** l'allure de la courbe enveloppe (h) est modifiée de façon adaptative, par le fait que des retards (difficultés de marche) des modules (1) mûs électriquement sont détectés d'une manière rapportée à la position et mémorisés.

**14.** Procédé selon au moins l'une des revendications précédentes, **caractérisé en ce que** des paramètres de la courbe caractéristique du moteur électrique (4) sont associés aux positions de déplacement par l'intermédiaire de la course de déplacement et que la courbe enveloppe (b) limitant la force en excès est calculée sur cette base.

**15.** Procédé selon au moins l'une des revendications précédentes, **caractérisé en ce qu'**une valeur absolue, qui correspond à la force en excès maximale résultante, du courant (I) est ajoutée au courant du moteur, qui correspond au couple respectif du moteur, de la courbe caractéristique du moteur et que le courant délivré au moteur électrique (4) est limité, sur au moins une partie de la course de déplacement, à cette valeur maximale résultante du courant.

**16.** Procédé selon au moins l'une des revendications précédentes, **caractérisé en ce que** la courbe enveloppe (b) limitant la force en excès est réglée à un niveau élevé lorsque, une fois que le paramètre (I,M) a atteint la vitesse limite prédéterminée, la vitesse du module (1) mû électriquement ne diminue pas ou que l'accélération négative ne dépasse pas une valeur limite.

**17.** Procédé selon la revendication 16, **caractérisé en ce que** le relèvement de la courbe enveloppe (b) s'effectue d'une valeur absolue prédéterminée.

**18.** Procédé selon la revendication 16, **caractérisé en ce que** le relèvement de la courbe enveloppe (b) s'effectue jusqu'à ce que la vitesse du module mû électriquement (1) a atteint une valeur déterminée.

**19.** Procédé selon au moins l'une des revendications précédentes, **caractérisé en ce que** l'augmentation de l'absorption de courant (di/dt) du moteur électrique (4) est retardée et/ou limitée.

**20.** Procédé selon au moins l'une des revendications précédentes, **caractérisé en ce que** le taux d'impulsions de la modulation d'impulsions en durée est calculé à partir de la vitesse de rotation de ralenti, de la vitesse de rotation réelle et de la courbe caractéristique du moteur électrique (4).

# Fig. 1

# Fig. 2

# Fig. 3

Fig. 4

# Fig. 5

Regelungsphase

b

a

Δs

Δt

# Fig. 6a

Δs = 0

# Fig. 6b

Δt⁰

# Fig. 7a

Δs

# Fig. 7b

Δt¹   Δt⁰

# Fig. 8

# Fig. 9